**Europäisches Patentamt**

**European Patent Office**

**Office européen des brevets**

(19)

(11) Veröffentlichungsnummer : **0 028 391**
**B1**

(12) **EUROPÄISCHE PATENTSCHRIFT**

(45) Veröffentlichungstag der Patentschrift :
**16.02.83**

(21) Anmeldenummer : **80106627.5**

(22) Anmeldetag : **29.10.80**

(51) Int. Cl.³ : **C 08 L 77/00, C 08 K 3/34**

(54) Gefüllte Polyamidformmasse.

(30) Priorität : **05.11.79 DE 2944611**

(43) Veröffentlichungstag der Anmeldung :
**13.05.81 Patentblatt 81/19**

(45) Bekanntmachung des Hinweises auf die Patenterteilung : **16.02.83 Patentblatt 83/07**

(84) Benannte Vertragsstaaten :
**CH DE FR GB IT LI NL**

(56) Entgegenhaltungen :
**DE A 1 694 066**
**DE A 2 425 259**
**DE A 2 643 204**

(73) Patentinhaber : **BASF Aktiengesellschaft**
**Carl-Bosch-Strasse 38**
**D-6700 Ludwigshafen (DE)**

(72) Erfinder : **Theysohn, Rainer, Dr.**
**Bruesseler Ring 38**
**D-6700 Ludwigshafen (DE)**
Erfinder : **Seiler, Erhard, Dr.**
**Erpolzheimer Strasse 1**
**D-6700 Ludwigshafen (DE)**
Erfinder : **Dorst, Hans Georg, Dr.**
**Berliner Strasse 23**
**D-6705 Deidesheim (DE)**
Erfinder : **Zahradnik, Franz, Dr.**
**Schwedlerstrasse 120**
**D-6700 Ludwigshafen (DE)**

## Gefüllte Polyamidformmasse

Die vorliegende Erfindung betrifft eine thermoplastische Formmasse auf Basis von Polyamid-6,6, die ein feinteiliges, silanmodifiziertes Silikat als Füllstoff enthält, mit verbesserter Verarbeitbarkeit und Oberflächengüte.

Es ist bekannt, Polyamide mit silikatischen Füllstoffen auszurüsten, um die Steifigkeit, die Wärmeformbeständigkeit oder auch die Oberflächenhärte der Formmassen zu verbessern. Füllstoffe haben im Gegensatz zu den ebenfalls verstärkend wirkenden Glasfasern den Vorteil, daß die Formmassen ein isotropes Schwindungs- und Verzugsverhalten aufweisen. Nachteilig bei Füllstoffe enthaltenden Polyamidformmassen ist oftmals ihre geringe Zähigkeit, da durch Kerbwirkung der Füllstoffteilchen die Festigkeitseigenschaften des Polyamids erheblich beeinträchtigt werden können. Darüber hinaus zeigen Formteile vor allem aus hochgefüllten Polyamiden an der Oberfläche ungleichförmige Mattstellen und sogenannte « Auskreidungen », die ihre Verwendbarkeit z. B. bei Sichtteilen erheblich einschränken.

Nach der DE-OS 19 65 434 kann man die mechanischen Eigenschaften, vor allem die Zähigkeit von gefüllten Polyamiden dadurch verbessern, daß man den Verstärkerfüllstoff mit Organosilanverbindungen beschichtet und damit eine bessere Haftung erzielt. Die Oberflächenqualität der Formteile wird dadurch in vielen Fällen vermindert.

Nach der DE-AS 23 49 835 kann die Oberflächenqualität von gefüllten Polyamid-Formkörpern durch den Zusatz von 0,1 bis 2 % eines Salzes einer höheren Carbonsäure, z. B. Zinkstearat und 0,5 bis 4 % eines Lactams verbessert werden. Dieser Effekt tritt jedoch bei einigen besonders feinteiligen silikatischen Füllstoffen nicht in ausreichendem Maße ein ; bei Polyamid-6,6, welches mit silanmodifiziertem calciniertem Kaolin gefüllt ist, wird sogar eine Verschlechterung beobachtet.

Der Erfindung lag also die Aufgabe zugrunde, gefüllte thermoplastische Formmassen auf Basis von Polyamid-6,6 zu entwickeln, die sich zu Formteilen mit glatten, glänzenden Oberflächen verarbeiten lassen.

Diese Aufgabe wird erfindungsgemäß dadurch gelöst, daß man Mischungen einsetzt aus Polyamid-6,6 mit einem K-Wert von 68 bis 73 und bestimmten andersartigen Polyamiden. Als Abmischkomponente kommen dabei in Frage :

A. 10 bis 50 Gew.% Polyamid-6,6 mit einem K-Wert von 58 bis 64, vorzugsweise von 60 bis 63,

B. 5 bis 40 Gew.% eines Copolyamids mit einem K-Wert von 68 bis 82, vorzugsweise von 69 bis 73, aus 50 bis 95, vorzugsweise 80 bis 88 Gew.% Caprolactam und 5 bis 50, vorzugsweise 12 bis 20 Gew.% Hexamethylendiaminadipat, oder

C. 10 bis 40 Gew.% des Polyamids A und 10 bis 40 Gew.% des Copolyamids B.

Der Hauptbestandteil der thermoplastischen Formmasse ist Polyamid-6,6 mit einem K-Wert (gemessen nach Fikentscher, Cellulosechemie 13 (1932), Seite 58, in 1%iger Lösung in konzentrierter Schwefelsäure) von 68 bis 73, vorzugsweise von 69 bis 72. Die Formmasse enthält 20 bis 50, vorzugsweise 30 bis 45 Gew.% eines feinteiligen, silanmodifizierten silikatischen Füllstoffes. Bevorzugte Füllstoffe sind natürlich vorkommende oder synthetische Silikate des Magnesiums, Calciums, Aluminiums und Zirkoniums.

Besonders bevorzugt ist calcinierter Kaolin mit einem $Al_2O_3$-Gehalt von 44 bis 45 Gew.% und einem $SiO_2$-Gehalt von 52 bis 54 Gew.%, der durch thermische Behandlung der natürlich vorkommenden Aluminiumsilikate Kaolin oder Kaolinit bei Temperaturen zwischen 800 und 1 300 °C erhalten wird. Seine Mohs-Härte soll vorzugsweise kleiner als 5 sein. Die Partikelgröße soll bevorzugt zwischen 0,01 μm und 10 μm, vorzugsweise zwischen 0,05 μm und 3 μm liegen, die spezifische Oberfläche ist größer als 6 $m^2$/g, vorzugsweise größer als 10 $m^2$/g.

Gut geeignet ist auch Calciumsilikat mit der ungefähren Bruttozusammensetzung $CaSiO_3$. Seine Korngröße liegt bevorzugt zwischen 0,01 und 30 μm, insbesondere zwischen 0,5 und 20 μm ; im Falle der nadelförmigen Modifikation liegt der Durchmesser zwischen 0,01 und 10 μm und die Länge zwischen 2 und 50 μm.

Ferner ist Zirkoniumsilikat mit der ungefähren Bruttozusammensetzung $ZrSiO_4$ geeignet. Die bevorzugte Korngröße liegt hier zwischen 0,01 und 10 μm.

Als Modifizierungsmittel für die Füllstoffe werden Silane vom Typ $R—CH_2—CH_2—CH_2—Si—(O—R')_3$ bevorzugt, bei denen R eine Aminogruppe bzw. ein Rest mit mehreren Aminogruppen, eine Epoxigruppe oder eine ein- oder mehrfunktionelle Estergruppe darstellt. R' ist eine Methyl- oder Äthylgruppe. Der Füllstoff wird vorzugsweise direkt mit dem Silan und ggf. zusätzlich mit üblichen Schlichtemitteln beschichtet. Es ist aber auch möglich, das Silan entweder in Substanz oder in Form eines leicht handhabbaren rieselfähigen Konzentrates, z. B. auf Basis des wasserfreien Silikats, das mindestens 40 Gew.% an Silan enthält, bei der Herstellung der Formmassen zuzugeben.

Die erfindungsgemäßen Formmassen können noch übliche Zusatzstoffe und Hilfsmittel, wie z. B. UV-, Hitze- oder Hydrolysestabilisatoren, z. B. auf Kupfer-, Phenol- oder Aminbasis enthalten, ferner Schmier-, Gleit- und Trennmittel, Farbpigmente und Flammschutzmittel. Das Polyamid kann im Sinne einer weiteren Zähigkeitsverbesserung polymermodifiziert sein, z. B. mit Copolymeren des Äthylens, die gegebenenfalls Carboxylgruppen enthalten können.

Die Herstellung der erfindungsgemäßen Formmassen erfolgt auf den einschlägig bekannten Maschinen zur Herstellung gefüllter Thermoplaste, wie z. B. Einwellen- oder Zweiwellen-Extrudern oder Schneckenknetern. In der Regel mischt man dabei die Polyamidgranulate mit dem feinteiligen Füllstoff, sowie gegebenenfalls den Zuschlagstoffen, mechanisch ab, und schmilzt die Mischung bei Temperaturen zwischen 260 °C und 310 °C auf. Eine getrennte Dosierung des Füllstoffs in den Granulateinzug oder eine Zugabe des Füllstoffs zu der bereits aufgeschmolzenen Mischung der Polyamide ist jedoch auch möglich.

Die homogene schmelzgemischte Formmasse wird zu Strängen extrudiert, gekühlt und granuliert. Die Granulate können dann einer weiteren Verarbeitung im Spritzguß oder durch Extrusion zugeführt werden.

Die in den Beispielen genannten Prozente und Teile beziehen sich auf das Gewicht.

Beispiele

In einem Zweischnecken-Kneter (Typ ZSK der Fa. Werner und Pfleiderer) wurden die Polyamide in Granulatform, sowie die Füllstoffe als feine Pulver zudosiert. Die Polyamide wurden bei Temperaturen zwischen 270 und 290 °C aufgeschmolzen und mit den Füllstoffen homogen vermischt. Die Mischung wurde in Strängen ausgetragen, abgekühlt, granuliert und getrocknet. Zur Prüfung der Oberflächenqualität wurden aus dem Granulat boxenförmige Prüfkörper mit den Abmessungen 25 × 10 × 10 cm und einer Wanddicke von 2 mm bei einer Schmelzetemperatur von 280 °C und einer Formtemperatur von 70 °C spritzgegossen. Der Anguß lag auf der Unterseite des Bodens des Prüfkörpers.

Folgende Ausgangsstoffe wurden eingesetzt :

Polyamid A : Polyamid-6,6 mit einem K-Wert von 72
Polyamid B : Polyamid-6,6 mit einem K-Wert von 62
Polyamid C : Copolyamid aus 85 % Caprolactam und 15 % Hexamethylendiaminadipat mit K-Wert 72
Al-Silikat : wasserfreier calcinierter Kaolin der Zusammensetzung 44,5 % $Al_2O_3$ und 52,3 % $SiO_2$ mit einer spezifischen Oberfläche von 18 bis 20 $m^2/g$ und einer mittleren Korngröße von 0,72 $\mu$m, beschichtet mit 0,8 % $\gamma$-Aminopropyltriäthoxysilan
Zr-Silikat : Zusammensetzung 65 % $ZrO_2$ und 35 % $SiO_2$, mittlere Korngröße unter 1 $\mu$m, beschichtet mit 1 % Aminopropyltriäthoxysilan.

Die Formmassen enthielten jeweils 1 % eines Stabilisatorkonzentrats auf Basis Polyamid-6 mit 1 % CuBr und 10 % $CaBr_2$.

| Beispiel | Polyamid | | Silikat | | Oberflächenqualität |
|---|---|---|---|---|---|
| | Teile | Art | Teile | Art | |
| 1 | 60 | A | 40 | Al | matt, Flecken im Angußbereich |
| 2 | 40 | A | 40 | Al | glänzend, keine Flecken |
| | 20 | B | | | |
| 3 | 40 | A | 40 | Al | glänzend, keine Flecken |
| | 20 | C | | | |
| 4 | 30 | A | 40 | Al | glänzend, keine Flecken |
| | 15 | B | | | |
| | 15 | C | | | |
| 5 | 60 | A | 40 | Zr | glänzend, Flecken im Angußbereich |
| 6 | 40 | A | 40 | Zr | glänzend, keine Flecken |
| | 20 | B | | | |

**Anspruch**

Thermoplastische Polyamid-Formmasse, welche 20 bis 50 Gew.% eines feinteiligen, silanmodifizierten, silikatischen Füllstoffs enthält, dadurch gekennzeichnet, daß das Polyamid eine Mischung ist aus

A. 90 bis 50 Gew.% Polyamid-6,6 mit einem K-Wert von 68-73, und
10 bis 50 Gew.% Polyamid-6,6 mit einem K-Wert von 58 bis 64, oder
B. 95 bis 60 Gew.% Polyamid-6,6 mit einem K-Wert von 68 bis 73, und

3

5 bis 40 Gew.% eines Copolyamids mit einem K-Wert von 68 bis 82 aus 95 bis 50 Gew.% Caprolactam und 5 bis 50 Gew.% Hexamethylendiaminadipat, oder

C. 80 bis 20 Gew.% Polyamid-6,6 mit einem K-Wert von 68 bis 73,

10 bis 40 Gew.% Polyamid-6,6 mit einem K-Wert von 58 bis 64, und

10 bis 40 Gew.% eines Copolyamids mit einem K-Wert von 68 bis 82 aus 95 bis 50 Gew.% Caprolactam und 5 bis 50 Gew.% Hexamethylendiaminadipat.

## Claim

A thermoplastic nylon molding material which contains from 20 to 50 % by weight of a finely divided silane-modified silicate filler, wherein the nylon is a mixture of

A. from 90 to 50 % by weight of a nylon 6,6 having a K value of 68-73 and

from 10 to 50 % by weight of a nylon 6,6 having a K-value of 58-64, or

B. from 95 to 60 % by weight of a nylon 6,6 having a K-Value of 68-73 and

from 5 to 40 % by weight of a nylon copolymer having a K-value of 68-82, and obtained from 95-50 % by weight of caprolactam and 5-50 % by weight of hexamethylenediamine adipate, or

C. from 80 to 20 % by weight of a nylon 6,6 having a K-value of 68-73,

from 10 to 40 % by weight of a nylon 6,6 having a K-value of 58-64 and

from 10 to 40 % by weight of a nylon copolymer having a K-value of 68-82, and obtained from 95-50 % by weight of caprolactam and 5-50 % by weight of hexamethylenediamine adipate.

## Revendication

Matière à mouler thermoplastique, à base de polyamide, qui contient 20 à 50 % en poids de charge silicatique, modifiée par du silane et finement divisée, caractérisée par le fait que le polyamide est un mélange de :

A. 90 à 50 % en poids de polyamide-6,6 d'un indice K de 68-73, et

10 à 50 % en poids de polyamide-6,6 d'un indice K de 58 à 64, ou

B. 95 à 60 % en poids de polyamide-6,6 d'un indice K de 68 à 73, et

5 à 40 % en poids d'un copolyamide d'un indice K de 68 à 82 de 95 à 50 % en poids de caprolactame et 5 à 50 % en poids d'hexaméthylènediaminadipate, ou

C. 80 à 20 % en poids de polyamide-6,6 d'un indice K de 68 à 73,

10 à 40 % en poids de polyamide-6,6 d'un indice K de 58 à 64, et

10 à 40 % en poids d'un copolyamide d'un indice K de 68 à 82 de 95 à 50 % en poids de caprolactame et 5 à 50 % en poids d'hexaméthylènediaminadipate.